# EUROPÄISCHE PATENTSCHRIFT

(11) **EP 0 490 213 B1**
(45) Veröffentlichungstag und Bekanntmachung des Hinweises auf die Patenterteilung: **11.05.1994**
(21) Anmeldenummer: 91120683.7
(22) Anmeldetag: 02.12.1991
(51) Int. Cl.: B60J 7/22

(54) **Vorrichtung zur Geräusch- und Schwingungsminderung an tangential überströmten Öffnungen von Kraftfahrzeugen, insbesondere an Schiebedachöffnungen**
Noise and vibration damping device for vehicle opening exposed to a tangential air flow, especially for sliding roofs
Dispositif pour la diminution du bruit et des vibrations des voitures exposées à un courant d'air tangential, en particulier pour toit ouvrant

(30) Priorität: 11.12.1990 DE 4039485
(43) Veröffentlichungstag der Anmeldung: 17.06.1992
(73) Patentinhaber: Bayerische Motoren Werke Aktiengesellschaft, 80788 München (DE)
(72) Erfinder: Stadler, Marinus, W-8167 Irschenberg (DE)

(56) Entgegenhaltungen:
- BE-A- 572 858
- US-A- 1 487 151

## Beschreibung

Die Erfindung bezieht sich auf eine Vorrichtung zur Geräusch- und Schwingungsminderung an tangential überströmten Öffnungen eines Schiebedachs von Kraftfahrzeugen nach dem Oberbegriff des Patentanspruchs 1.

Derartige Vorrichtungen sind bereits bekannt (DE-A- 38 42 676), wobei am hinteren Rand des Windabweisers ein über diesen Rand hinaus nach oben schwenkbares zusätzliches Luftleitelement vorgesehen ist. Das Luftleitelement teilt die am Rand des Windabweisers abreißende Strömung zusätzlich auf und bildet einen Störkörper. Die Wirkungsweise derartiger zusätzlicher Luftleitelemente (Flaps) ist je nach Karosserieform unterschiedlich. Die Flaps erfordern darüber hinaus zusätzlichen Bauraum und stören auch den ästhetischen Gesamteindruck in gewissem Maße.

Der Erfindung liegt die Aufgabe zugrunde, eine Vorrichtung zur Geräusch- und Schwingungsminderung an Kraftfahrzeug-Öffnungen zu schaffen, die möglichst keinen zusätzlichen Bauraum benötigt, eine gute Wirksamkeit hat und auch die Ästhetik kaum beeinträchtigt.

Diese Aufgabe wird erfindungsgemäß dadurch gelöst, daß der Windabweiser zumindest in Teilbereichen seiner Fläche mit einem luftdurchlässigen Netz versehen ist. In den Flächenbereichen, in denen das Netz angeordnet ist, hat der Windabweiser entsprechende Öffnungen, die dann von dem Netz ausgefüllt werden. Es könnte aber auch ein metallisches Gitter sein, das in geeigneter Weise mit dem Windabweiser verbunden ist. In beiden Fällen kann das Netz bzw. das Gitter nachträglich an dem mit den vorbereiteten Öffnungen versehenen Windabweiser befestigt werden. Das Netz bzw. Gitter könnte aber auch beim Spritzvorgang des Windabweisers miteingespritzt werden. Schließlich ist es auch denkbar, das Netz in einem Arbeitsgang beim Spritzen oder Spritzgießen des Windabweisers mitzufertigen.

Weitere vorteilhafte Einzelheiten der Erfindung sind in den Unteransprüchen gekennzeichnet.

Der erfindungsgemäß ausgebildete Windabweiser erfüllt im wesentlichen zwei Funktionen: Zum einen lenkt er die von vorne quer gegen den Windabweiser anströmende Luft teilweise - wie ein herkömmlicher Windabweiser - nach oben ab. Dabei reißt die Luftströmung an der hinteren Kante des Windabweisers ab. Es bilden sich dadurch Wirbel aus, die aber gegenüber den von vollflächigen Windabweisern erzeugten Wirbeln schon reduziert sind. Zum anderen durchströmt ein gewisser Anteil der anströmenden Luft aber auch die Bereiche des Windabweisers, die mit dem luftdurchlässigen Netz oder Gitter versehen sind. Der Teilstrom der Luft, der das Netz passiert hat, bildet sich als sehr fein turbulente Schicht aus, die unterhalb der zuerstgenannten turbulenten ersten Luftströmung nach hinten abströmt. Die fein turbulente zweite Schicht hinter dem Netz bzw. Gitter bildet eine zusätzlich geschaffene Grenzschicht bzw. Scherschicht, die als "Polster" für die darüber befindliche turbulente Schicht wirkt, die durch den an der Windabweiserkante verursachten Strömungsabriß verursacht ist.

Die feinst turbulente untere Teilströmung vermindert den sonst möglichen Aufbau der für die Anregung der als sogenanntes Schiebedach-Wummern bekannten und äußerst störenden Druckpulsationen. Es kommt kaum mehr zu der bei geöffnetem Schiebedach häufig beobachteten Erscheinung des Wummerns, bei dem der Fahrzeuginnenraum in Verbindung mit der überströmten Schiebedachöffnung wie ein Helmholtz-Resonator wirkt.

Das mit konventionellen Windabweisern entstehende Totwassergebiet direkt hinter dem Windabweiser entsteht mit dem erfindungsgemäßen Windabweiser nicht, denn dieses Gebiet wird mit der feinst turbulenten Strömung stetig aufgefüllt. Dadurch wird auch der Strömungsabriß an der freien Windabweiserkante geringer. Außer dem Abbau der schon beschriebenen Wummergeräusche läßt sich auch das als breitbandiges Strömungsgeräusch wahrnehmbare Rauschen deutlich herabsetzen.

Weiterhin ist der Teil der Luftströmung, der auf den Rand der Öffnung auftrifft, wesentlich gleichmäßiger. Demzufolge ist das subjektive Zugempfinden der im Bereich der Schiebedachöffnung sitzenden Fahrzeuginsassen wesentlich angenehmer als unter dem Einfluß der heftigen Pulsationsschwingungen mit örtlichen und periodischen hohen Luftgeschwindigkeiten.

Selbstverständlich haben auf die Wirkungsweise des neuen Windabweisers beispielsweise die Widerstandszahl des verwendeten Netzes, der Aufbau des das Netz haltenden Netzträgers, dessen Anstellwinkel und Höhe entscheidenden Einfluß auf das erreichbare Ergebnis. Es lassen sich jedoch gute Abstimmungen im Hinblick auf die sich zum Teil widersprechenden Ziele, wie Zugerscheinungen, Rauschen oder Wummern, erreichen. Die erfindungsgemäßen Maßnahmen bedingen kein zusätzliches Gewicht und sind auch unter einem relativ geringen Kostenaufwand realisierbar.

Die Erfindung ist im folgenden anhand mehrerer in der Zeichnung dargestellter Ausführungsbeispiele näher erläutert. Es zeigt
- Fig. 1: eine perspektivische Ansicht auf ein Fahrzeugdach mit einem ersten Ausführungsbeispiel der erfindungsgemäßen Vorrichtung;
- Fig. 2: einen schematisierten Schnitt nach der Linie II-II in Fig. 1;
- Fig. 3: verschiedene Frontansichten weiterer Ausführungsbeispiele, stark schematisiert mit zugeordneten Querschnitten;
- Fig. 4: eine der Fig. 1 entsprechende Ansicht eines weiteren Ausführungsbeispiels;
- Fig. 5: eine der Fig. 1 entsprechende Ansicht eines nochmals abgeänderten Ausführungsbeispiels und
- Fig. 6: einen schematisierten Schnitt nach der Linie VI-VI in Fig. 5.

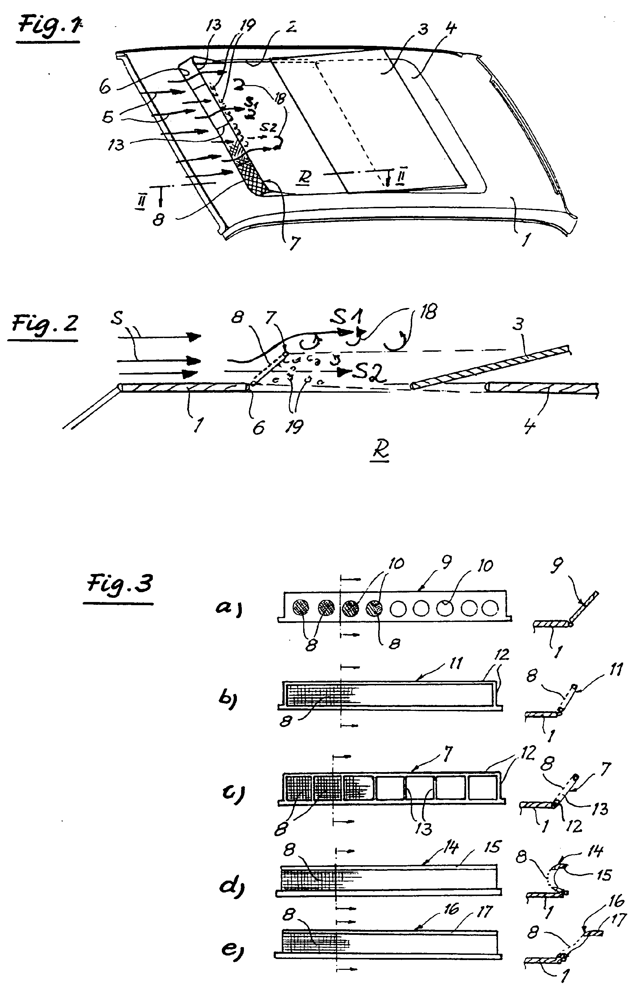

In Fig. 1 der Zeichnung ist das Dach 1 eines Personenkraftwagens dargestellt, das eine vergleichsweise große Öffnung 2 hat. Die Öffnung 2 ist durch zwei Deckel verschließbar, einen vorderen Deckel 3 und einen hinteren Deckel 4. Die nachfolgend erläuterten Maßnahmen können aber ebenfalls an einem üblichen Schiebedach mit nur einem einzigen Deckel angewendet werden.

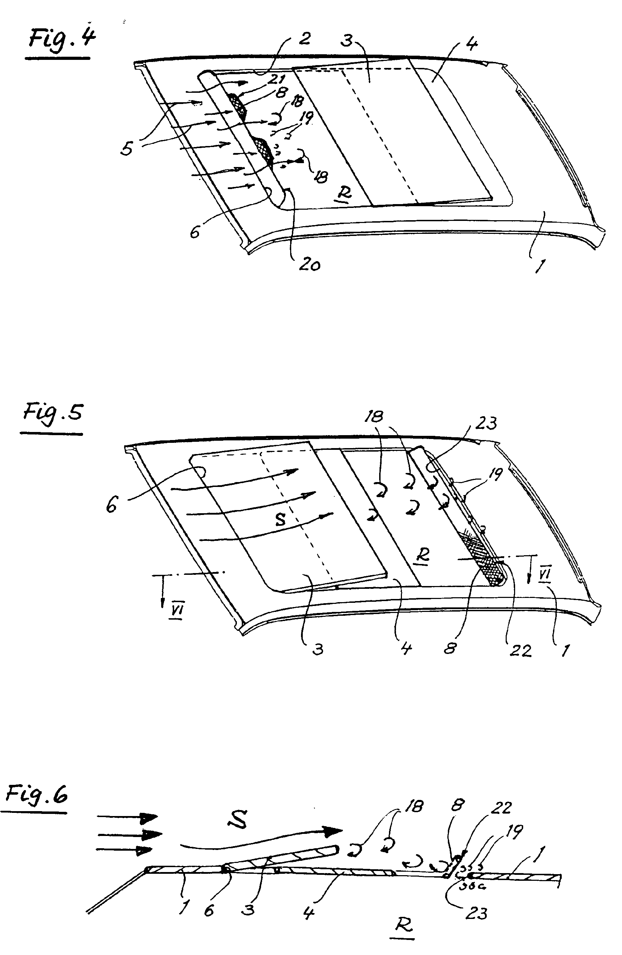

Quer zur Luftströmung 5 und parallel zum vorderen Rand 6 der Öffnung 2 ist ein von der Fahrzeugkontur nach außen bzw. schräg nach hinten oben abstehender Windabweiser 7 vorgesehen. Der Windabweiser 7 hat keine vollkommen geschlossene Fläche, sondern ist zumindest in Teilbereichen seiner Fläche mit einem luftdurchlässigen Netz 8 bzw. Gitter versehen. Zumindest in diesen Teilbereichen seiner Fläche ist auf diese Weise der Windabweiser in einem gewissen Ausmaß strömungsdurchlässig. Wie man aus Fig. 3 erkennt, sind für die Ausbildung eines Windabweisers dabei verschiedene Varianten möglich. Fig. 3a zeigt einen Windabweiser 9, der eine Reihe von nebeneinander geordneten Öffnungen 10 hat. Der Windabweiser 9 bildet dabei gewissermaßen einen Träger für die kreisrunden Öffnungen 10, deren Durchtrittsquerschnitt mit dem Netz 8 ausgefüllt ist. Gemäß Fig. 3b kann der Windabweiser 11 aber auch einen äußeren umlaufenden Rahmen 12 umfassen, an dem das Netz 8 festgelegt ist. Der Windabweiser 7 gemäß Fig. 1 und Fig. 3c umfaßt ebenfalls einen umlaufenden Rahmen 12, der aber zusätzlich noch senkrecht zu seinen Längsseiten verlaufende Zwischenstege 13 hat.

Der in Fig. 3d schematisch dargestellte Windabweiser 14 hat in Seitenansicht eine etwa teilkreisförmige Kontur und der freie Rand 15 weist dabei nach hinten. Der Windabweiser 16 gemäß Fig. 3e ist ebenfalls nahezu vollflächig mit dem Netz 8 versehen und hat im Querschnitt die Form eines flachen S. Auch hier ist der freie Rand 17 nach hinten gerichtet.

Die Wirkungsweise des Windabweisers nach den Fig. 1 und 2 bzw. 3c ist folgende: Die über die Vorderkante des Daches ankommende Strömung S wird zum Teil als Teilstrom S1 nach oben abgelenkt wie bei einem herkömmlichen Windabweiser. Diese Teilströmung S1 reißt an der hinteren Kante des Windabweisers 7 ab. Da nur der Teilstrom S1 den Windabweiser 7 überströmt, weist die sich danach ausbildende turbulente Luftschicht schon vergleichsweise geringere Wirbel 18 auf. Ein Teil der auf den Windabweiser zukommenden Strömung S kann wegen des Netzes 8 aber auch den Windabweiser 7 als Teilstrom S2 durchströmen. Es entsteht hinter dem Windabweiser nicht das sonst übliche Totwassergebiet, sondern eine sehr fein turbulente Strömung mit sehr kleinen Wirbeln 19. Es baut sich eine im wesentlichen aus dem Teilstrom S2 bestehende Luftschicht zwischen der mit Strömungsgeschwindigkeit fließenden turbulenten Strömung S1 und der im Fahrzeuginnenraum ruhenden Luftmasse R auf. Die Schicht der Teilströmung S2 verhindert nun weitgehend den sonst beobachteten Aufbau der für die Anregung der Wummerfrequenzen verantwortlichen Druckpulsationen. Gleichzeitig sind aber auch das mit Windabweisern generell nicht zu vermeidende Strömungsrauschen und das schon weiter oben erwähnte subjektive Zugempfinden spürbar verbessert.

Das Prinzip des teilweise durchströmten Luftleitelementes läßt sich auch bei einem in Fig. 4 dargestellten Windabweiser 20 nutzen, der mit zusätzlichen über seinen hinteren Rand wegragenden Luftleitelementen 21 (ähnlich Flaps) versehen ist. Versieht man derartige Luftleitelemente 21 über einen großen Bereich ihrer Fläche mit dem Netz 8 bzw. Gitter, so läßt sich auch hier die nach dem Windabweiser 20 sonst erzeugte stark turbulente Strömungsschicht so beeinflussen, daß die periodischen Pulsationsschwingungen (Wummmern) markant vermindert sind. Zusätzlich ist aber dabei das sonst erhebliche Strömungsrauschen ebenfalls reduziert bzw. in einen als angenehmer empfundenen Frequenzbereich verlagert.

Bei den bisher beschriebenen Ausführungsbeispielen sind die mit dem durchströmbaren Netz 8 versehenen Windabweiser bzw. Luftleitelemente durchwegs am vorderen Rand 6 der Öffnung 2 angeordnet gewesen. Gute Ergebnisse hinsichtlich der Geräusch- und Schwingungsreduzierung sind aber auch mit einem Windabweiser 22 gemäß Fig. 5 erreichbar, der vor dem stromabwärts liegenden hinteren Rand 23 der Öffnung 2 angeordnet ist. Seine Wirkungsweise wird anhand von Fig. 6 ebenfalls mit Hilfe eines Doppelschiebe-Hebedaches beschrieben, das einen vorderen Deckel 3 und einen hinteren Deckel 4 hat. Wie man erkennt, ist der vordere Deckel 3 etwas angehoben und der hintere Deckel 4 nach vorne geschoben. Natürlich könnte der am hinteren Rand 23 angeordnete Windabweiser 22 auch an einer Schiebedachöffnung mit lediglich einem Deckel in der gleichen Weise verwendet werden.

Die parallel über den vorderen Rand des Daches 1 ankommende Strömung S wird durch den vorderen Deckel 3 etwas nach oben abgelenkt. Am hinteren Rand des Deckels 3 reißt die Luftströmung ab und es werden wiederum kräftige Wirbel 18 erzeugt. Wegen des vor dem hinteren Rand 23 der Öffnung 2 angeordneten Windabweisers 22 treffen diese Wirbel 18 jedoch nicht mehr auf den hinteren Rand 23 der Öffnung 2. Die mit den Wirbeln 18 behaftete Strömung trifft auf den Windabweiser 22 und durchströmt dessen Netz 8. Hinter dem Netz 8 bildet sich eine sehr stark vergleichmäßigte, allenfalls noch ganz fein turbulente Luftströmung aus. Das sonst hinzunehmende Strömungsrauschen ist stark reduziert. Aber auch die Anregung der ruhenden Luftmasse R im Fahrzeuginnenraum wie bei einem Helmholtz-Resonator wird vermindert.

Abweichend von dem der Zeichnung entnehmbaren Ort des Windabweisers 22 relativ nahe vor dem hinteren Rand 23 der Öffnung 2 kann der Windabweiser 22 auch mit einem größeren Abstand vor dem Rand 23 liegen, wenn aufgrund der aerodynamischen Gegebenheiten die Luftströmung weiter vorne wieder gegen die Öffnung 2 nach unten gerichtet ist.

Es hat sich schließlich auch gezeigt, daß die vorne an der Öffnung 2 angeordneten Windabweiser 7 oder 11 auch deutliche Vorteile ergeben, wenn über der Öffnung 2 des Schiebedaches ein Dachträger angeordnet ist. Mit herkömmlichen Windabweisern treffen die nach dem Strömungsabriß starken Luftwirbel auf den Querholm des Dachträgers, der zu Schwingungen angeregt wird. Diese Schwingungen werden zu einem großen Teil als Körperschall über die Dachträgerfüße in den Karosseriekörper eingeleitet, zum Teil auch direkt als Luftschall über die Öffnung 2 in den Fahrzeuginnenraum.

Mit den erfindungsgemäß mit einem Netz 8 oder Gitter versehenen Windabweisern wird nicht so viel Luft nach oben abgelenkt, die auch nicht so weit nach oben abgedrängt wird. Die dennoch erzeugten Wirbel 18 sind weniger turbulent und treffen sanfter und gleichmäßiger auf den Träger-Querholm, so daß eine merkliche akustische Komfortverbesserung erreichbar ist.

## Patentansprüche

1. Vorrichtung zur Geräusch- und Schwingungsminderung an der tangential überströmten Öffnung (2) eines Schiebedachs von Kraftfahrzeugen, mit einem quer zur Strömungsrichtung und parallel zu einem Rand der öffnung (2) verlaufenden sowie von der Fahrzeugkontur nach außen abstehenden Windabweiser (7),
dadurch gekennzeichnet, daß der Windabweiser (7, 9, 11, 14, 16) zumindest in Teilbereichen seiner Fläche mit einem luftdurchlässigen Netz (8) versehen ist.

2. Vorrichtung nach Anspruch 1, mit nebeneinander angeordneten Öffnungen (10) im Windabweiser (9), dadurch gekennzeichnet, daß das Netz (8) in oder an den Öffnungen (10) angeordnet ist.

3. Vorrichtung nach Anspruch 1, dadurch gekennzeichnet, daß der Windabweiser (11) einen äußeren umlaufenden Rahmen (12) umfaßt, an dem das Netz (8) festgelegt ist.

4. Vorrichtung nach Anspruch 3, dadurch gekennzeichnet, daß der Rahmen (12) senkrecht zu seinen Längsseiten verlaufende Zwischenstege (13) aufweist.

5. Vorrichtung nach Anspruch 3, dadurch gekennzeichnet, daß der Windabweiser (14) in Seitenansicht eine etwa teilkreisförmige Kontur hat und der freie Rand (15) nach hinten weist.

6. Vorrichtung nach Anspruch 3, dadurch gekennzeichnet, daß der Windabweiser (16) im Querschnitt die Form eines flachen S hat und mit dem freien Rand (17) nach hinten gerichtet ist.

7. Vorrichtung nach Anspruch 1, mit einem Windabweiser (20), der an seinem freien Rand wenigstens ein diesen Rand überragendes Zusätzliches Luftleitelement (21) aufweist, dadurch gekennzeichnet, daß dieses Luftleitelement (21) mit dem luftdurchlässigen Netz (8) versehen ist.

8. Vorrichtung nach einem der Ansprüche 1 bis 7, dadurch gekennzeichnet, daß der mit dem Netz (8) versehene Windabweiser (7, 9, 11, 14, 16) an dem stromaufwärts liegenden Rand (6) der öffnung (2) angeordnet ist.

9. Vorrichtung nach einem der Ansprüche 1 bis 7, dadurch gekennzeichnet, daß der Windabweiser (22) vor dem stromabwärts liegenden Rand (23) der öffnung (2) angeordnet ist.

## Claims

1. A device for reducing noise and vibration at an opening (2) exposed to a tangential air flow in a sliding roof for a vehicle, the device comprising a wind deflector (7) which extends transversely to the direction of flow and parallel to an edge of the opening (2) and projects outwards from the vehicle contour, characterised in that the wind deflector (7, 9, 11, 14, 16) has an air-permeable net or grille (8) over at least part of its surface.

2. A device according to claim 1 comprising side-by- side openings (10) in the wind deflector (9), characterised in that the net (8) is disposed in or on the openings (10).

3. A device according to claim 1, characterised in that the wind deflector (11) has an external peripheral frame (12) to which the net (8) is fastened.

4. A device according to claim 3, characterised in that the frame (12) has intermediate webs (13) extending at right angles to its longitudinal sides.

5. A device according to claim 3, characterised in that the wind deflector (14) in side view has an approximately part-circular outline and the free edge (15) extends backwards.

6. A device according to claim 3, characterised in that the wind deflector (16) in cross-section has the shape of a flattened S and its free edge (17) extends backwards.

7. A device according to claim 1 comprising a wind deflector (20) provided with at least one additional air-guiding element (21) projecting beyond its free edge, characterised in that this air-guiding element (21) supports the air-permeable net (8).

8. A device according to any of claims 1 to 7, characterised in that the wind deflector (7, 9, 11, 14, 16) comprising the net (8) is disposed at the upstream edge (6) of the opening (2).

9. A device according to any of claims 1 to 7, characterised in that the wind deflector (22) is disposed in front of the downstream edge (23) of the opening (2).

## Revendications

1. Dispositif pour la réduction du bruit et des vibrations sur l'ouverture (2) exposée à un courant d'air tangentiel d'un toit ouvrant de véhicules automobiles, comportant un déflecteur pour l'air (7) transversal au sens du courant et parallèle à un bord de l'ouverture (2), ainsi que se détachant du contour du véhicule vers l'extérieur, caractérisé en ce que le déflecteur (7, 9, 11, 14, 16) est muni au moins dans des zones partielles de sa surface d'un treillis (8) laissant passer l'air.

2. Dispositif selon la revendication 1, muni d'ouvertures (10) disposées les unes à côté des autres dans le déflecteur (7) caractérisé en ce que le treillis (8) est placé dans ou sur les ouvertures (10).

3. Dispositif selon la revendication 1, caractérisé en ce que le déflecteur (11) comporte, tout autour à l'extérieur de celui-ci, un cadre (12), sur lequel est fixé le treillis.

4. Dispositif selon la revendication 3, caractérisé en ce que le cadre (12) comporte perpendiculairement à ses côtés longitudinaux des barrettes intermédiaires (13).

5. Dispositif selon la revendication 3, caractérisé en ce que le déflecteur (14) présente, en vue de côté, une structure à peu près en forme de demi-cercle et dont le bord libre (15) est dirigé vers l'arrière.

6. Dispositif selon la revendication 3, caractérisé en ce que le déflecteur (16) présente, en section transversale, la forme d'un S plat dont le bord libre (17) est dirigé vers l'arrière.

7. Dispositif selon la revendication 1, muni d'un déflecteur (20) qui comporte sur son bord libre au moins une chicane (21) additionnelle dépassant de ce bord, caractérisé en ce que cette chicane (21) est équipée d'un treillis (8) laissant passer l'air.

8. Dispositif selon l'une des revendications 1 à 7, caractérisé en ce que le déflecteur (7, 9, 11, 14, 16) équipé du treillis (8) est placé sur le bord (6) de l'ouverture situé en amont du courant.

9. Dispositif selon l'une des revendications 1 à 7, caractérisé en ce que le déflecteur (22) est placé en avant du bord (23) de l'ouverture (2) situé en avant du courant.
